# EUROPÄISCHE PATENTANMELDUNG

(11) **EP 2 295 823 A2**
(43) Veröffentlichungstag der Anmeldung: **16.03.2011**
(21) Anmeldenummer: 10008663.6
(22) Anmeldetag: 19.08.2010
(51) Int. Cl.: F16B 45/00

(54) **Doppelhaken zum Aufhängen von Bauteilen**

(30) Priorität: 09.09.2009 DE 202009005258 U
(71) Anmelder: Gebr. Meiser GmbH, 66839 Schmelz-Limbach (DE)
(72) Erfinder: Meiser, Wolfgang, 66636 Tholey (DE)
(74) Vertreter: Vièl, Christof

(57) **Zusammenfassung**

Die Erfindung betrifft einen Doppelhaken zum Aufhängen von Bauteilen, der zwei über einen Verbindungsbereich (1) miteinander verbundene Haken (2) aufweist.
Um das Aufschwimmen der Bauteile beim Eintauchen in das Zinkbad zu verhindern, wird im Rahmen der Erfindung vorgeschlagen, daß ein Haken (2) des Doppelhakens eine Aushängesicherung (3) aufweist.

## Beschreibung

Die Erfindung betrifft einen Doppelhaken zum Aufhängen von Bauteilen, der zwei über einen Verbindungsbereich miteinander verbundene Haken aufweist.

In Zinkereibetrieben müssen die zu verzinkenden Bauteile an einer Traverse befestigt werden. Es ist bekannt, die Bauteile mittels Draht an der Traverse zu befestigen, jedoch ist dies zeit- und personalaufwendig.

Weiterhin ist es bekannt, Doppelhaken zum Aufhängen der Bauteile an der Traverse zu verwenden, was den Zeit- und Personalaufwand reduziert. Diese Doppelhaken sind an beiden freien Enden jeweils hakenförmig umgebogen, wobei ein Haken um die Traverse gelegt wird und an dem anderen Haken das zu verzinkende Bauteil aufgehängt wird.

Allerdings kommt es hierbei immer wieder zu Problemen, da sich die Bauteile beim Eintauchen in das Zinkbecken vom Haken lösen können, was als Aufschwimmen bezeichnet wird.

Aufgabe der Erfindung ist es daher, das Aufschwimmen der Bauteile beim Eintauchen in das Zinkbad zu verhindern.

Diese Aufgabe wird erfindungsgemäß dadurch gelöst, daß ein Haken des Doppelhakens eine Aushängesicherung aufweist.

Die Aushängesicherung verhindert das Aushängen des Hakens, indem sie eine zu öffnende Verbindung zwischen dem Bereich des Hakens, der dem Verbindungsbereich benachbart ist, und dem freien Ende eines der Haken bildet, so daß der Haken durch die Aushängesicherung geschlossen wird.

Eine bevorzugte Ausgestaltung der Erfindung besteht darin, daß die Aushängesicherung als federndes Element ausgebildet ist, das zwischen dem Bereich des Hakens, der dem Verbindungsbereich benachbart ist, und dem freien Ende dieses Hakens angeordnet ist

Eine bevorzugte Ausgestaltung besteht darin, daß die Aushängesicherung u-förmig ausgebildet ist, wobei die freien Schenkel des U zwischen dem Bereich des Hakens, der dem Verbindungsbereich benachbart ist, und dem freien Ende dieses Hakens angeordnet sind.

Hierdurch wird ein in etwa ovaler Innenraum von Haken und Aushängesicherung abgegrenzt, der eine gute Beweglichkeit des Hakens ermöglicht, ohne daß die Gefahr des Aushängens besteht.

In diesem Zusammenhang ist es zweckmäßig, daß das federnde Element aus Federstahl besteht.

Das federnde Element kann an dem Bereich des Hakens, der dem Verbindungsbereich benachbart ist, beispielsweise über eine Schweißverbindung befestigt sein.

Eine Ausgestaltung der Erfindung besteht darin, daß ein Haken durch drei aufeinanderfolgende 90°-Biegungen erzeugt ist, wobei das freie Ende des Hakens unter Freilassung einer Öffnung auf den Verbindungsbereich des Doppelhakens gerichtet ist.

Auf diese Weise wird ein Haken gebildet, der von der Seite betrachtet etwa quadratisch ausgebildet ist. Aufgrund der eckigen Form des Hakens, der zur Halterung des Bauteiles dient und der Rückführung des freien Endes zum Verbindungsbereich hin wird das Problem des Aufschwimmens des Bauteiles vollständig verhindert.

In diesem Zusammenhang ist es vorteilhaft, daß zumindest im Bereich der ersten 90°-Biegung eine Materialverstärkung vorgesehen ist.

Bei einer Weiterbildung der Erfindung ist vorgesehen, daß beide Haken des Doppelhakens mit einer Aushängesicherung versehen sind.

Es liegt auch im Rahmen der Erfindung, daß der Verbindungsbereich des Doppelhakens als Stahlseil ausgebildet ist, das mit den beiden Haken verbunden ist.

Weiterhin ist vorgesehen, daß an dem der Öffnung des Hakens abgewandten Seite eine Öse angeordnet ist

Es ist zur Erfindung gehörig, daß die beiden Haken des Doppelhakens um 90° oder um 180° zueinander versetzt angeordnet sind.

Nachfolgend wird die Erfindung anhand von Ausfuhrungsbeispielen näher erläutert.

Es zeigen
- Fig. 1: einen erfindungsgemäßen Doppelhaken mit einer Aushänge- sicherung,
- Fig. 2: einen erfindungsgemäßen Doppelhaken mit zwei Aushänge- sicherungen,
- Fig. 3a und 3b: einen erfindungsgemäßen Doppelhaken mit einer Aushänge- sicherung und einer Öse in Seitenansicht und als Draufsicht
- Fig. 4: einen erfindungsgemäßen Doppelhaken mit einer Aushänge- sicherung und einem als Stahlseil ausgebildeten Verbindungs- bereich,
- Fig. 5: einen erfindungsgemäßen Doppelhaken mit zwei Aushänge- sicherungen und einem als Stahlseil ausgebildeten Verbindungs- bereich,
- Fig. 6a und 6b: einen erfindungsgemäßen Doppelhaken mit einer Aushänge- sicherung und einem als Stahlseil ausgebildeten Verbindungs-
- Fig. 7a und 7b: bereich, wobei die Haken um 90° zueinander versetzt angeord- net sind, in zwei um 90° versetzten Ansichten, einen anderen erfindungsgemäßen Doppelhaken in zwei um 90° versetzten Ansichten,
- Fig. 7c: den Haken gemäß Fig. 7a und 7b mit einem daran befestigten Bauteil.

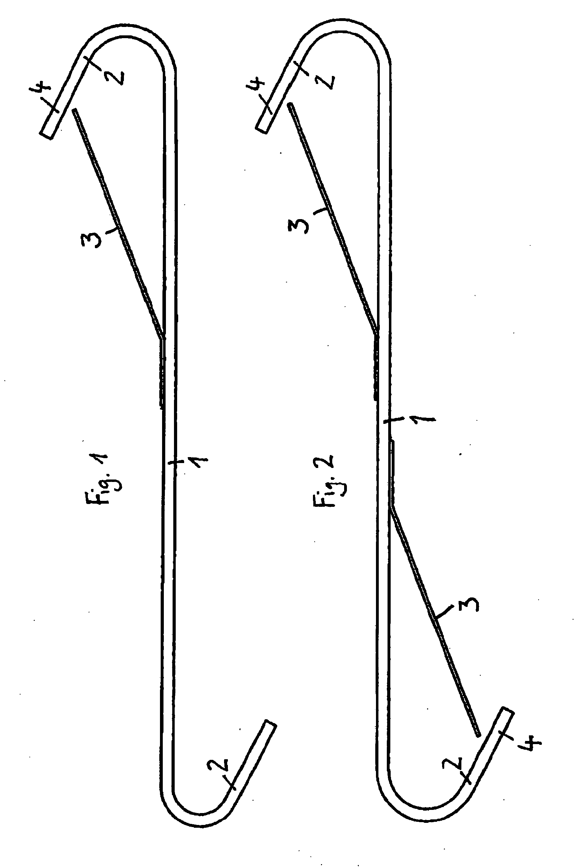

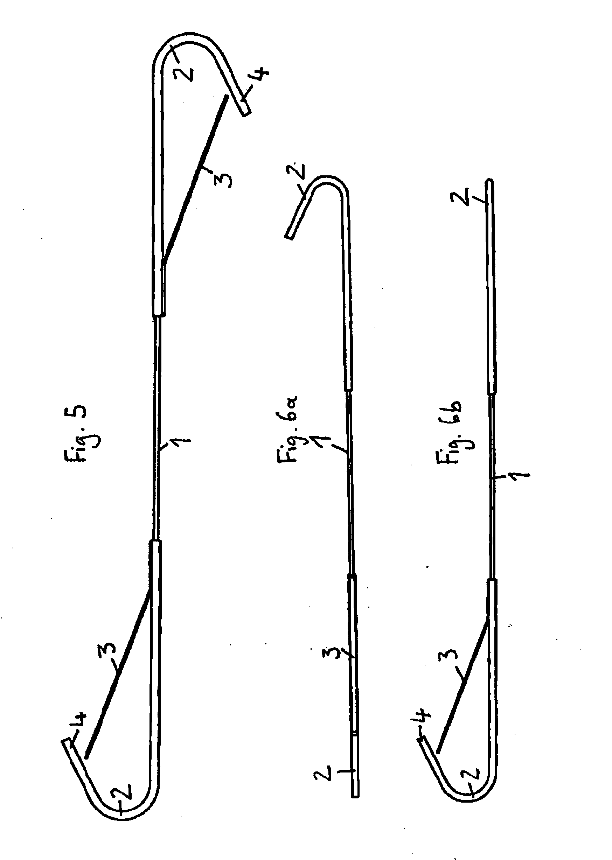

Wie aus den Fig. 1 bis 6b hervorgeht, weist der erfindungsgemäße Doppelhaken zwei über einen Verbindungsbereich 1 miteinander verbundene Haken 2 auf. Die Haken 2 können um 180° (Fig. 1 bis 5) oder um 90° (Fig. 6a, 6b) zueinander versetzt angeordnet sein. Einer der Haken 2 wird um die Traverse gelegt und in den anderen Haken 2 wird das zu verzinkende Bauteil eingehängt.

Um das unerwünschte Austreten des zu verzinkenden Bauteils aus dem Haken 2 zu verhindern, weist dieser eine Aushängesicherung 3 auf, die hier als federndes Element 3 ausgebildet ist, das zwischen dem Bereich des Hakens 2, der dem Verbindungsbereich 1 benachbart ist, und dem freien Ende 4 dieses Hakens 2 angeordnet ist. Das federnde Element 3 kann beispielsweise aus Federstahl bestehen und an dem Bereich des Hakens 2, der dem Verbindungsbereich 1 benachbart ist, über eine Schweißverbindung befestigt sein.

Wie aus den Fig. 2 und 5 ersichtlich ist, können auch beide Haken 2 des Doppelhakens mit einer Aushängesicherung 3 versehen sein. Dies verhindert auch das versehentliche Lösen des an der Traverse befestigten Hakens 2.

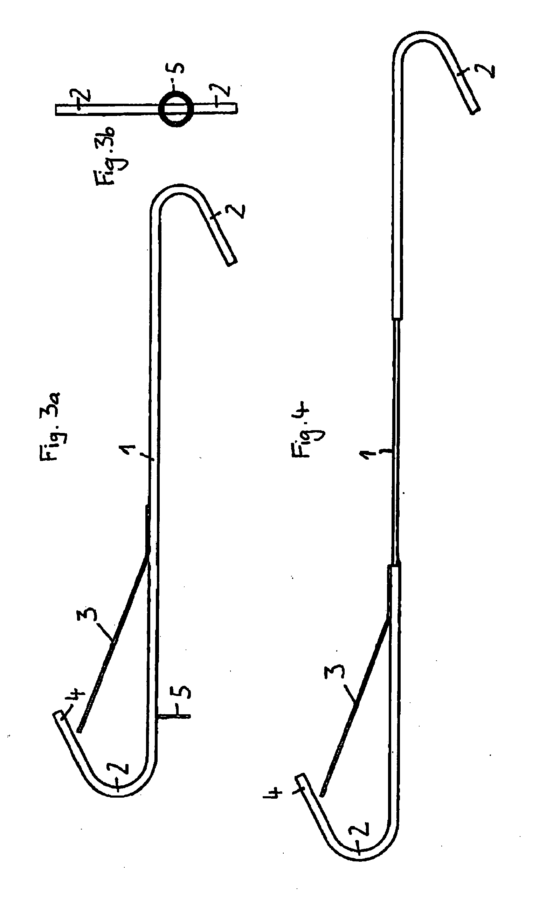

Fig. 3a und 3b zeigen, daß an dem der Öffnung des Hakens abgewandten Seite eine Öse 5 angeordnet sein kann, die ebenfalls zur Befestigung von zu verzinkenden Bauteilen dienen kann.

Aus den Fig. 4 bis 6 ist ersichtlich, daß der Verbindungsbereich 1 des Doppelhakens als Stahlseil ausgebildet sein kann, das mit den beiden Haken 2 verbunden ist. Dies ermöglicht eine Flexibilität im zentralen Bereich des Doppelhakens. Das federnde Element 3 ist oberhalb bzw. unterhalb des Verbindungsbereiches 1 befestigt.

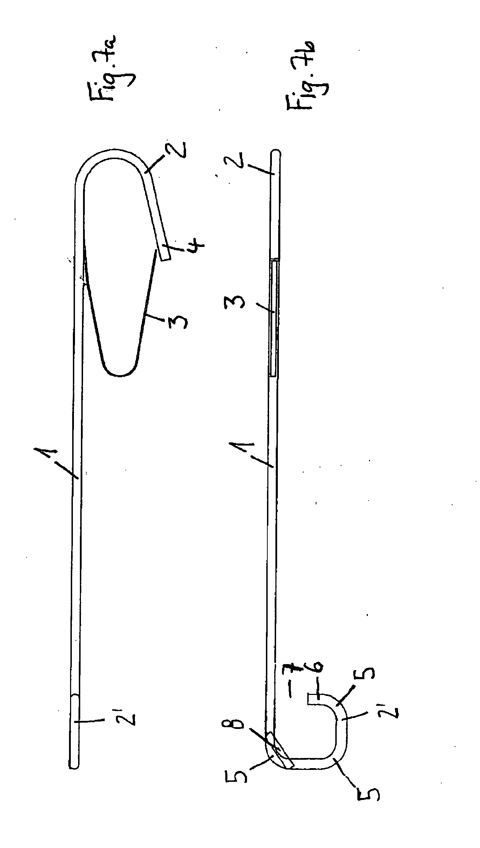

Die Fig. 7a und 7b zeigen eine weitere Ausgestaltung des erfindungsgemäßen Doppelhakens. Auch bei dieser Ausgestaltung sind die Haken 2 um 90° zueinander versetzt angeordnet. Bei dem zur Befestigung des Doppelhakens dienenden Haken 2 ist die Aushängesicherung 3 u-förmig ausgebildet, wobei die freien Schenkel des U zwischen dem Bereich des Hakens 2, der dem Verbindungsbereich 1 benachbart ist, und dem freien Ende dieses Hakens 2 angeordnet sind. Hierdurch wird ein in etwa ovaler Innenbereich ausgebildet, der eine gute Beweglichkeit auch des befestigten Doppelhakens ermöglicht. Der andere Haken 2', der der Halterung des Bauteils dient, ist durch drei aufeinanderfolgende 90°-Biegungen 5 erzeugt, wobei das freie Ende 6 des Hakens 2' unter Freilassung einer Öffnung 7 auf den Bereich des Hakens 2, der dem Verbindungsbereich 1 benachbart ist, gerichtet ist. Durch die Öffnung 7 wird das Bauteil in den Haken 2' eingeführt Im Bereich der ersten 90°-Biegung 5 ist eine Materialverstärkung 8 angeordnet, die die mechanische Belastbarkeit des Hakens 2 erhöht.

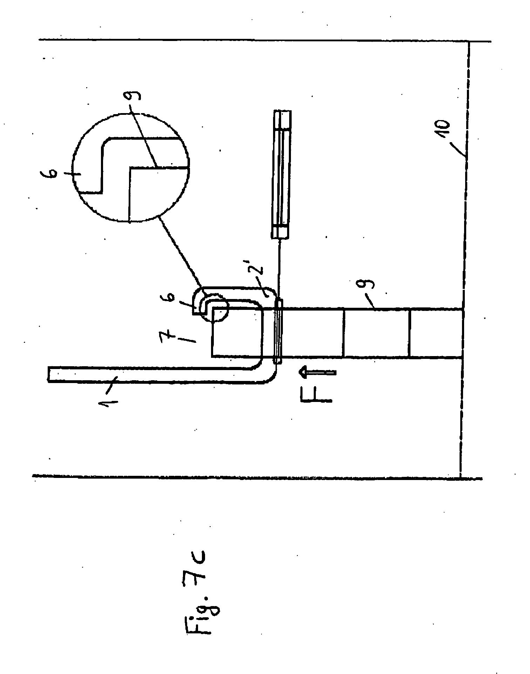

In Fig. 7c ist dargestellt, wie der Doppelhaken gemäß Fig. 7a als gegen die Auftriebskraft F wirkender Aufschwimmschutz für das an dem Doppelhaken befestigte Bauteil 9, welches in ein Zinkbad 10 getaucht wird, dient. Einerseits liegt der gerade Bereich zwischen der ersten und der zweiten 90°-Biegung 5 an dem Bauteil 9, hier einem Gitterrost, an und verhindert ein Aufsteigen des Bauteiles 9. Andererseits blockiert das auf den Bereich des Hakens 2', der dem Verbindungsbereich 1 benachbart ist, gerichtete freie Ende des Hakens 2' ein Aufsteigen des Bauteils 9, da das freie Ende teilweise über der Seitenkante des Bauteils 9 angeordnet ist und das Bauteil 9 beim Aufsteigen hieran anstoßen würde.

## Patentansprüche

1. Doppelhaken zum Aufhängen von Bauteilen, der zwei über einen Verbindungsbereich (1) miteinander verbundene Haken (2) aufweist, **dadurch gekennzeichnet, daß** ein Haken (2) des Doppelhakens eine Aushängesicherung (3) aufweist.

2. Doppelhaken gemäß Anspruch 1, **dadurch gekennzeichnet, daß** die Aushängesicherung (3) als federndes Element (3) ausgebildet ist, das zwischen dem Bereich des Hakens (2), der dem Verbindungsbereich (1) benachbart ist, und dem freien Ende dieses Hakens (2) angeordnet ist.

3. Doppelhaken gemäß Anspruch 2, **dadurch gekennzeichnet, daß** die Aushängesicherung (3) u-förmig ausgebildet ist, wobei die freien Schenkel des U zwischen dem Bereich des Hakens (2), der dem Verbindungsbereich (1) benachbart ist, und dem freien Ende dieses Hakens (2) angeordnet sind.

4. Doppelhaken gemäß Anspruch 2, **dadurch gekennzeichnet, daß** das federnde Element (3) aus Federstahl besteht.

5. Doppelhaken gemäß Anspruch 1, **dadurch gekennzeichnet, daß** ein Haken (2') durch drei aufeinanderfolgende 90°-Biegungen (5) erzeugt ist, wobei das freie Ende (6) des Hakens (2') unter Freilassung einer Öffnung (7) auf den Bereich des Hakens (2), der dem Verbindungsbereich (1) benachbart ist, gerichtet ist

6. Doppelhaken gemäß Anspruch 5, **dadurch gekennzeichnet, daß** zumindest im Bereich der ersten 90°-Biegung (5) eine Materialverstärkung (8) vorgesehen ist.

7. Doppelhaken gemäß Anspruch 1, **dadurch gekennzeichnet, daß** beide Haken (2) des Doppelhakens mit einer Aushängesicherung (3) versehen sind.

8. Doppelhaken gemäß Anspruch 1, **dadurch gekennzeichnet, daß** der Verbindungsbereich (1) des Doppelhakens als Stahlseil ausgebildet ist, das mit den beiden Haken (2) verbunden ist.

9. Doppelhaken gemäß Anspruch 1, **dadurch gekennzeichnet, daß** an dem der Öffnung des Hakens (2) abgewandten Seite eine Öse (5) angeordnet ist.

10. Doppelhaken gemäß Anspruch 1, **dadurch gekennzeichnet, daß** die beiden Haken (2) des Doppelhakens um 90° oder um 180° zueinander versetzt angeordnet sind.
